# EUROPEAN PATENT SPECIFICATION

(11) **EP 4 384 339 B1**
(45) Date of publication and mention of the grant of the patent: **11.02.2026**
(21) Application number: 22761034.2
(22) Date of filing: 10.08.2022
(51) Int. Cl.: B23K 1/00, B23K 1/008, B23K 1/20, B23K 3/04, B23K 3/08, B23K 101/42

(54) **METHOD OF CONTROLLING A PREHEATING PROCESS FOR PREHEATING A BOARD IN PREPARATION FOR PROCESSING OF THE BOARD IN A SOLDERING MACHINE**
VERFAHREN ZUR STEUERUNG EINES VORWÄRMPROZESSES ZUM VORWÄRMEN EINER PLATTE VOR DER BEARBEITUNG DER PLATTE IN EINER LÖTMASCHINE
PROCÉDÉ DE COMMANDE D'UN PROCESSUS DE PRÉCHAUFFAGE POUR PRÉCHAUFFER UNE CARTE EN PRÉPARATION POUR LE TRAITEMENT DE LA CARTE DANS UNE MACHINE À SOUDER

(30) Priority: 11.08.2021 EP 21190885
(43) Date of publication of application: 19.06.2024
(73) Proprietor: Illinois Tool Works, Inc., Glenview, Illinois 60025 (US)
(72) Inventor: COLIJN, Antonie, Cornelis, Glenview, Illinois 60025 (US); DIEPSTRATEN, Geradus, Johannes, Adrianus, Maria, Glenview, Illinois 60025 (US)
(74) Representative: HGF
(86) International application number: PCT/US2022/039904
(87) International publication number: WO 2023/018763

(56) References cited:
- JP-A- 2011 119 466
- JP-A- H02 234 491
- US-A- 5 515 605
- US-A1- 2006 006 210
- US-A1- 2007 144 626

## Description

### Technical Field of Invention

The invention relates to control of a preheating process. In particular, the invention relates to methods of controlling a preheating process for preheating a board for use in a soldering machine, preheating apparatuses for preheating a board in preparation for processing of the board in a soldering machine, a soldering machine comprising such preheating apparatus, and to a method of maintaining such preheating system, see claims 1, 5, 8, 10, 14 and 15.

### Background

Selective soldering machines are used to solder electronics components to boards, such as to printed circuit boards (PCBs). The boards pass through the machine and undergo a soldering process to connect the components to the board. The soldering process typically includes the application of flux to the joints between the components and the board, preheating the components and the board, and applying solder to the connections between the components and the board.

The board is preheated to evaporate alcohol from previously applied flux, and to reduce the thermal shock to the board when solder is applied thereto. Typically, the board enters a preheating chamber, which may be the same chamber as a fluxing chamber and/or a soldering chamber. Once in the preheating chamber a heating unit, which faces a surface of the board, emits heat to heat the board.

The heating unit may comprise an infra-red (IR) heating unit which comprises strips of IR bulbs. Heat emission from the IR bulbs is controlled by controlling the voltage supplied to the IR bulbs. The heat emission determines the amount of heat transfer from the IR bulbs to the board. Clearly, if one or more bulbs begins to deteriorate, or has different operating properties to other IR bulbs, then this causes deviation from the target temperature and so the board is not heated to the required temperature. The heating unit may comprise a forced convection preheating unit. In forced convection preheating, at least one electrical heater is situated between at least one fan and the electronics board. The heater/s emit heat, and the fan/s create air flow to transport the heat to the board. The heat transfer to the board is controlled by controlling the voltage supplied to the heater/s, or by controlling the rotation speed of the fan/s using a frequency inverter, with the actual fan speed being measured using an encoder. If any one of the fan/s or the heater/s deteriorate or have different operating parameters than other fan/s and/or heater/s, then this may cause deviation from the target temperature and so the board will not be heated to the required temperature.

In order to correct for differences between the required board temperature and the actual board temperature, it is known to use a temperature probe to measure the ambient temperature between the heating unit and the board, or to measure the temperature of the board at a discrete location. If the temperature measured using the temperature gauge is different to that which is expected, then the heating unit can be adjusted accordingly to emit more, or less, heat. As the boards are preheated in a production line, adjustments are sometimes calculated from measurements taken during preheating of one board, and the adjustments are implemented for subsequent boards. This means that the board from which temperatures are measured is not heated by an adjusted amount, and so is preheated to an incorrect temperature, and subsequent boards are preheated with an adjustment that is calculated for a preceding board.

Another limitation of this method is that each temperature gauge only measures the temperature at one location, and, due to the high processing speeds of soldering machines, it is not usually feasible to measure the temperature at multiple locations using the same temperature gauge. Instead, the number of temperature gauges can be increased to measure the temperature at multiple locations, but this is expensive and cumbersome. Furthermore, even if more temperature gauges are used, each temperature gauge will only measure the temperature at a specific location, leaving the temperature of most of the board unmeasured.

This means that hot and cold spots on the boards caused by deterioration of IR lamps, heater/s and/or fan/s, or incorrect heating unit settings for example, often go undetected. These hot and cold spots can lead to board warpage, thermal damage to the board at hot spots, or thermal shock during soldering of cold spots. Board warpage may lead to failed placement of electronic components, and ultimately to the scrapping of the board and electrical components. Furthermore, suboptimal performance of parts of the heating unit often goes undetected due to hot or cold spots on the boards being undetected.

Furthermore, overheating of all or some of the board can lead to the de-activation of flux which has been applied to the board in preparation for a soldering process. The flux contains activators, which are chemicals, which, when activated, prevent oxidation and support the wetting of the metal surface for soldering, at certain activation temperatures. These temperatures are typically 150°C or higher. If the board is preheated to greater than the activation temperature of the activators, then insufficient chemistry might remain for the flux to effectively prevent oxidation and to effectively support the wetting of the metal surface.

US2006006210 (describing the preamble of claims 1, 5, 8 and 10) discloses determining a heating characteristic value at a measuring point of an object at a measuring location of a heating furnace, as a single invariable by using temperature measured at the measuring point of the object and heating temperature and heating time at the measuring location of the heating furnace.

It would therefore be beneficial to overcome at least some of these limitations.

### Summary

According to first and second aspects of the present invention, there is provided a method of controlling a preheating process for preheating a board in preparation for processing of the board in a soldering machine as defined in claims 1 and 5, each method comprising the steps of:
providing a heating unit configured to heat a surface of the board, for example a calibration board or an electronics board;
providing the board to the heating unit;
providing electrical power to the heating unit such that the heating unit emits heat;
obtaining a profile of heat output from the heating unit and/or a temperature profile of the board;
adjusting the electrical power provided to the heating unit to adjust the heat output from the heating unit to the board, so as to reduce the range of temperatures in the temperature distribution on the board.

Advantageously, this means that the heat output from the heating unit to each board can be adjusted, such that the amount and/or distribution of heat transferred to the board is optimised to prevent overheating and board warpage, and to reduce thermal shock when solder is applied to the board.

The preheating process may take place in the soldering machine such that the method is for controlling a preheating process in the soldering machine. Processing of the board in the soldering machine may include the application of flux to the board and/or the application of solder to the board, to solder one or more electrical components onto the board.

The heating unit might be located facing a lower, or bottom, side of the board. The heating unit may be located facing an upper side, or topside, of the board. The heating unit may comprise a topside heating unit and a bottom side heating unit, the topside heating unit facing an upper side, or topside, of the board and the bottom side heating unit facing a lower, or bottom, side of the board.

According to the first aspect of the present invention, obtaining temperature profile of the board comprises using a thermal imaging camera to obtain a thermal image or a thermal video of the board. The thermal image or the thermal video of the board may include at least a part of the surface of the board which is heated by the heating unit. The thermal image or the thermal video may be of the surface of the board which is heated by the heating unit. The thermal image or the thermal video of the board may include at least a part of a surface of the board opposite to the surface which the heating unit is configured to heat. The thermal image or the thermal video of the board may be of the surface of the board opposite to the surface which the heating unit is configured to heat. Advantageously, a thermal image or a thermal video of the board may provide the distribution of heat across the entire surface, thereby allowing hot or cold spots to be identified. The heating unit can then be adjusted to bring hot and cold spots to the correct temperature. This can be used to provide evenly distributed preheating, as well as to minimise overheating, warpage and/or heating damage to the board. Additionally, or alternatively, a thermal image or a thermal video of the board may provide temperature measurements of electrical components. The heating unit can then be adjusted to avoid overheating of the components. Advantageously, a thermal video of the board may allow the preheating process to be monitored over time, which may enable the identification of trends which indicate a requirement for maintenance, repair, and/or replacement of any components of the heating unit.

According to the second aspect of the present invention, the heating unit comprises a plurality of bulbs, for example infra-red bulbs. Providing electrical power to the heating unit comprises providing electrical power to each bulb. Obtaining a profile of heat output from the heating unit comprises measuring the current drawn by each bulb, or the temperature of each bulb. Adjusting the electrical power provided to the heating unit comprises adjusting the electrical power provided to at least one bulb of the plurality of bulbs. Adjusting the electrical power provided to the heating unit comprises adjusting the electrical power provided to each bulb of the plurality of bulbs independently. The plurality of bulbs may face a lower, or bottom, side of the board. The plurality of bulbs may face an upper side, or topside, of the board. The plurality of bulbs may be arranged in a topside heating unit and in a bottom side heating unit, the topside heating unit facing an upper side, or topside, of the board and the bottom side heating unit facing a lower, or bottom, side of the board.

The heating unit may be or comprise a forced convection unit. The forced convection unit may comprise at least one fan and at least one heater. Providing electrical power to the heating unit may comprise providing electrical power to the at least one fan to control a rotation speed of the at least one fan and/or providing electrical power to the at least one heater to control the amount of heat emitted by the at least one heater. Obtaining a profile of the heat output from the heating unit may comprise measuring air flow temperature and/or air flow rate at at least one location in an air flow path from the fan. Adjusting the electrical power provided to the heating unit may comprise adjusting the electrical power provided to the heater and/or to the fan. The forced convection unit may face an upper side, or topside, of the board. The forced convection unit may face a lower, or bottom, side of the board. The heating unit may comprise two forced convection units, one forced convection unit arranged in a topside heating unit and one forced convection unit arranged in a bottom side heating unit, the topside heating unit facing an upper side, or topside, of the board and the bottom side heating unit facing a lower, or bottom, side of the board.

The topside heating unit may comprise the plurality of bulbs and the bottom side heating unit may comprise the forced convection unit. Alternatively, the bottom side heating unit may comprise the plurality of bulbs and the topside heating unit may comprise the forced convection unit. Controlling the rotation speed of the at least one fan may comprise using an encoder to measure the rotation speed. Controlling the rotation speed of the at least one fan may comprise using a frequency inverter to control the rotation speed.

The board may be an electronics board and the process may further comprise obtaining a temperature profile of one or more electrical components which are connected to the board. According to the first and second aspects of the present invention, the process comprises also adjusting the electrical power provided to the heating unit to maintain the temperature of the or each component to below a respective overheating temperature. Advantageously, this reduces the risk of, or prevents, overheating damage to the or each electrical component. The one or more components may be connected to the board in preparation for soldering to the board, for example after the preheating process.

According to a fifth aspect of the present invention, there is provided a method of maintaining a preheating unit as defined in claim 15, the method comprising using a controller to store data relating to:
the electrical power provided to the heating unit;
the profile of heat output from the heating unit and/or the temperature profile of the board;
adjustments made to the electrical power provided to the heating unit;
wherein the controller monitors the data to identify trends which indicate a requirement for maintenance, repair, and/or replacement of any components of the heating unit.

Advantageously, monitoring data in this way can be used to improve operational efficiencies, to predict lifetimes of components and of equipment, and to detect faults and/or damage early.

According to third and fourth aspects of the invention there is provided a preheating apparatus for preheating a board in preparation for processing of the board in a soldering machine as defined in claims 8 and 10, the apparatus comprising:
a heating unit configured to heat a surface of the board, for example a calibration board or an electronics board;
a sensor configured to obtain a profile of heat output from the heating unit and/or to obtain a temperature profile of the board;
power supply circuitry configured to provide electrical power to the heating unit such that the heating unit emits heat;
control circuitry configured to adjust the electrical power provided to the heating unit to adjust the heat output from the heating unit to the board, so as to reduce the range of temperatures in the temperature distribution on the board.

The heating unit might be located facing a lower, or bottom, side of the board. The heating unit may be located facing an upper side, or topside, of the board. The heating unit may comprise a topside heating unit and a bottom side heating unit, the topside heating unit facing an upper side, or topside, of the board and the bottom side heating unit facing a lower, or bottom, side of the board.

According to the third aspect of the present invention, the sensor comprises a thermal imaging camera. The thermal imaging camera is configured to obtain a thermal image of the board in order for the apparatus to obtain a temperature profile of the board.

The thermal imaging camera may be located such that, in use, the thermal image or the thermal video of the board includes at least a part of a surface of the board opposite to the surface which the heating unit is configured to heat. The thermal imaging camera may be located such that, in use, the thermal image or the thermal video of the board includes at least a part of the surface which is heated by the heating unit, in use.

According to the fourth aspect of the present invention, the heating unit comprises a plurality of bulbs, for example infra-red bulbs. The power supply circuitry is configured to provide electrical power to each bulb.

The control circuitry is configured to adjust the electrical power provided to at least one bulb of the plurality of bulbs. The control circuitry may be configured to adjust the electrical power provided to each bulb of the plurality of bulbs independently.

The plurality of bulbs may face a lower, or bottom, side of the board. The plurality of bulbs may face an upper side, or topside, of the board. The plurality of bulbs may be arranged in a topside heating unit and in a bottom side heating unit, the topside heating unit facing an upper side, or topside, of the board and the bottom side heating unit facing a lower, or bottom, side of the board.

According to the fourth aspect of the present invention, the sensor is configured to obtain a profile of heat output from the heating unit by measuring the current drawn by each bulb, or the temperature of each bulb.

The heating unit may be a forced convection unit comprising at least one fan and at least one heater. The power supply circuitry may be configured to provide electrical power to the at least one fan to control a rotation speed of the at least one fan and/or to provide electrical power to the at least one heater to control the amount of heat emitted by the at least one heater. The control circuitry may be configured to adjust the electrical power provided to the heater and/or to the fan.

The forced convection unit may face an upper side, or topside, of the board The forced convection unit may face a lower, or bottom, side of the board. The heating unit may comprise two forced convection units, one forced convection unit arranged in a topside heating unit and one forced convection unit arranged in a bottom side heating unit, the topside heating unit facing an upper side, or topside, of the board and the bottom side heating unit facing a lower, or bottom, side of the board.

The topside heating unit may comprise the plurality of bulbs and the bottom side heating unit may comprise the forced convection unit. Alternatively, the bottom side heating unit may comprise the plurality of bulbs and the topside heating unit may comprise the forced convection unit.

The sensor may be configured to obtain a profile of heat output from the heating unit by measuring air flow temperature and/or air flow rate at at least one location in an air flow path from the fan.

The power supply circuitry may be configured to control the rotation speed of the at least one fan by using an encoder to measure the rotation speed and a frequency inverter to control the rotation speed.

The control circuitry may be configured to store data relating to the electrical power provided to the heating unit. The control circuitry may be configured to store data relating to the profile of heat output from the heating unit and/or the temperature profile of the board. The control circuitry may be configured to store data relating to adjustment made to the electrical power provided to the heating unit. The control circuitry may be configured to monitor the data to identify trends which indicate a requirement for maintenance, repair, and/or replacement of any components of the heating unit.

According to a sixth aspect of the invention there is provided a soldering machine comprising the aforementioned preheating apparatus, see claim 14.

### Brief Description of Drawings

Example embodiment(s) of the invention are illustrated in the accompanying drawings, in which:
**Figure 1** illustrates a side view of an infrared preheater;
**Figure 2** illustrates a front view of an infrared preheater;
**Figure 3** illustrates a front view of a forced convection preheater;
**Figure 4** illustrates example layouts of heater units for preheating an electronics board;
**Figure 5** illustrates an electronics board being preheated using an infrared preheater;
**Figure 6** illustrates a thermal image of the electronics board shown in Figure 5;
**Figure 7** illustrates the power settings for each infrared bulb in the preheater, in response to an analysis of the thermal image of Figure 6;
**Figure 8** illustrates a thermal image of an electronics board with a callout temperature at a specific location on an electronics board;
**Figure 9** illustrates a software window used for analysing a thermal image of an electronics board; and
**Figure 10** illustrates an example of a thermal image of electrical components on an electronics board.

### Description

The illustrative embodiment relates to a method controlling a preheating process in a soldering machine.

The method is intended for use in a selective soldering machine. However, the method can be used with any soldering machine.

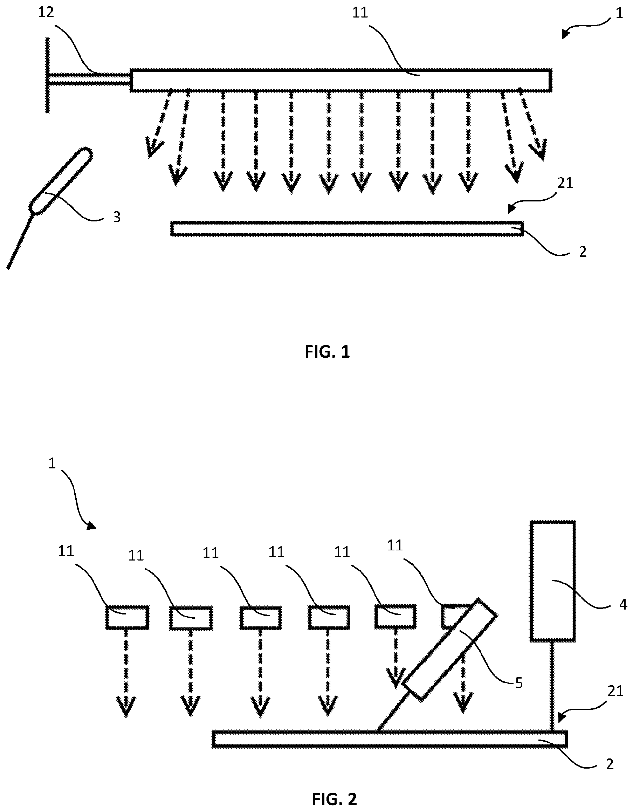

Referring to Figure 1, there is shown a method of preheating a board 2 using a heating unit 1. The board 2 is either a calibration board or an electronics board, for example a printed circuit board (PCB). In this example the heating unit 1 comprises a plurality of bulbs 11. In this example the bulbs 11 are infra-red (IR) bulbs. In this example the bulbs 11 are elongate bulbs arranged in parallel. In Figure 1 the bulbs 11 are shown facing a topside of the board 2. However, the bulbs 11 may instead face the bottom side of the board 11, or bulbs 11 may be located facing both the topside and the bottom side of the board 2.

The heating unit 1 is configured to heat a surface 21 of the board 2 when the board 2 is in a preheating position. In the preheating position the surface 21 faces the bulbs 11 and is spaced therefrom.

In this example each bulb 11 comprises a temperature sensor (not shown) and/or a current sensor (not shown). Each temperature sensor, if present, is provided proximal to the respective bulb 11 and measures the temperature surrounding the bulb 11. Each current sensor, if present, measures the electrical current drawn by each bulb 11. The temperature sensors and/or current sensors are in communication with a controller. The controller may otherwise be referred to as control circuitry.

In this example the heating unit 1 is connected to an electrical power supply (not shown) via electrical cables 12. The electrical cables 12 thereby provide power supply circuitry. In this example the heating unit 1 and/or power supply are in communication with the controller.

In this example a chamber sensor 3 is provided to measure ambient conditions between the board 2 and the bulbs 11. The ambient conditions may include, for example, temperature and/or humidity. The chamber sensor 3 is in communication with the controller. It will be appreciated that while one chamber sensor 3 is shown in this example, any number of chamber sensors 3 may be provided. It will be appreciated that the chamber sensor 3 is located between the bulbs 11 and the board 2 if the bulbs 11 are facing a bottom side of the board 2. If bulbs 11 face both the topside and the bottom side of the board 2 then a chamber sensor 3 is located between the topside bulbs 11 and the board 2 and between the bottom side bulbs 11 and the board 2.

In use, in this example, electrical power is provided to each bulb 11. Electrical power may be provided to each bulb 11 consecutively, or to any number of bulbs 11 simultaneously. The temperature sensors and/or current sensors measure the output of each bulb 11 to test the functionality of each bulb 11. Functionality is checked by ensuring that the heat emitted by each bulb 11 is as expected by the controller. Adjustments to the electrical power may be made if the heat output from each bulb is different to an amount that is expected. Temperature and/or current may be measured over the full length of each bulb 11, or only over a part of the length of each bulb 11.

In this example the chamber sensor 3 is also used to determine the ambient conditions between a conveyor (not shown), on which the board 2 is moved to the preheating position, and the heating unit 1. The ambient conditions may be the temperature and/or the humidity. The controller may adjust the power supplied to each bulb 11 to alter the ambient conditions between the conveyor and the heating unit 1.

The board 2 is moved, on the conveyor, to the preheating position. The controller determines an amount of power to be provided to each bulb 11 to emit a predetermined amount of heat, the amount of heat being calculated, or estimated, to heat the surface 21 of the board 2 to a desired temperature. The power supply provides the power to the bulbs 11 to heat the surface 21 of the board 2 according to the calculation.

The temperature sensors and/or current sensors may continue to measure the output of each bulb 11 to obtain a profile of the heat output from the heating unit 1. From this profile an amount and distribution of heat transferred from the heating unit 1 to the board 2 can be calculated. If temperature sensors are used, then the controller obtains the amount of heat emitted from each bulb 11 to determine the profile of heat output. The controller may also calculate the heat transfer to the surface 21 of the board 2, based upon the distance between the heating unit 1 and the board 2. If current sensors are used, then the controller calculates an expected heat emission of each bulb 11 based upon the current drawn by, and the voltage provided to, each bulb, to determine the temperature profile. This expected heat emission may then be used to calculate an expected heat transfer to the surface 21 of the board 2.

In this example the controller also continues to obtain measurements of temperature and/or humidity between the board 2 and the heating unit 1, from the chamber sensor 3. The controller may then adjust the electrical power supplied to each bulb 11 to adjust ambient conditions between the board 2 and the heating unit 1 if these are incorrect. Furthermore, if temperature is measured by the chamber sensor 3 then this may be used to determine the temperature profile of heat output from the heating unit 1. Furthermore, temperatures measured by the chamber sensor 3 may be used to calculate an amount of heat transferred from the heating unit 1 to the board 2. Either or both of a humidity measurement or a temperature measurement from the chamber sensor 3 may be used by the controller in determining a profile of heat output from the heating unit 1, and in calculating the amount and distribution of heat transferred from the heating unit 1 to the surface 21 of the board 2, using measurements of temperature and/or current at each bulb 11.

Once the controller has obtained a profile of heat output from the heating unit 1, the controller adjusts the electrical power provided to the heating unit 1 to adjust the heat output from the heating unit 1 to the board 2. The adjustments reduce the difference between the desired board temperature and the actual board temperature. The adjustments reduce the variations in temperature across the surface 21 of the board 2, to reduce the severity of hot and cold spots. The adjustments may be made for the same board 2 or may be made for a subsequent board 2 in the production line. Alternatively, if the board 2 is a calibration board, then the calibration board is inserted, periodically, into the soldering machine to be heated, to make any adjustments to the power supply to each bulb 11.

In this example the controller also stores data, from the start of the process and/or during operation, pertaining to the electrical power provided to each bulb 11, adjustments made to the electrical power provided to each bulb 11, measurements from the temperature sensor and/or the current sensor at each bulb 11, and/or the obtained profile of the heat output from the heating unit 1, and/or the calculated amount and/or distribution of heat transferred from the heating unit 1 to the board 2, for maintaining the method of preheating a board 2. The controller processes the data such that trends or anomalies in the data, which may be indicative of problems with parts of the soldering machine, of a requirement for maintenance or replacement, or of incorrect operating parameters, may be identified. Identification may be by the controller, by a separate computer, and/or by an operator. The data, or trends in the data, may also provide lifetime predictions for parts of the soldering machine, for example providing a lifetime expectation of each bulb 11.

Further sensors may be present and in communication with the controller. An example of another sensor is a temperature sensor in an exhaust, the exhaust extracting air from the area between the conveyor and the heating unit 1. Another example is a sensor which measures production room conditions. These sensors may be used in calculating the profile of the amount and/or distribution of heat transferred to the board, for example.

Turning now to Figure 2, there is shown a method of heating the board 2, using the heating unit 1 as described with reference to Figure 1. The method described with reference to Figure 2 is the same as that described with reference to Figure 1, except that a thermal imaging camera 4 and a board temperature sensor 5, for example a pyrometer, are provided. The chamber sensor 3 is omitted in this example, but it will be appreciated that the chamber sensor 3, or indeed any number of chamber sensors 3, may be provided. Also, as with Figure 1, the heating unit 1 of Figure 2 is shown facing the topside of the board 2. However, it will be appreciated that the heating unit may face the bottom side as well as, or instead of, facing the topside.

The thermal imaging camera 4 is configured to obtain a thermal image, or a thermal video, of the surface 21 of the board 2. The thermal imaging camera 4 may obtain at least one thermal image of all of the surface 21 of the board 2 or may obtain at least one thermal image of only a part of the board 2. The board 2 may be moved to a position where the thermal imaging camera 4 is able to obtain the necessary thermal image/s of the surface 21, for example the thermal imaging camera 4 may obtain thermal image/s after the board 2 has been preheated. The thermal imaging camera 4 may also obtain image/s of the board 2 via one or more mirrors, such that the thermal imaging camera 4 can be positioned away from the heating unit 1. The thermal imaging camera 4 may instead face a bottom side of the board, and obtain a thermal image, or thermal images, of the bottom side, or multiple thermal imaging cameras may be used to capture thermal images of both the topside and bottom side of the board 2. The controller obtains the profile of the amount and/or distribution of heat transferred from the heating unit 1 to the board 2 from the thermal image/s captured by the thermal imaging camera 4. The thermal imaging camera 4 may be used to provide a temperature profile of the board. The temperature profile may be obtained instead of, or alongside, the profile of heat output from the heating unit.

In this example not covered by the present invention, the board temperature sensor 5 is used to obtain a temperature at a discrete location on the board 2. Whilst one board temperature sensor 5 is shown, it will be appreciated that any number of board temperature sensors 5 may be used. Also, whilst the board sensor 5 is shown, in Figure 2, to obtain a temperature of a topside of the board 2, it will be appreciated that the temperature sensor 5, or another temperature sensor, may obtain a temperature at a discrete location on the bottom side of the board. The controller may use the measurement from the board temperature sensor 5 to obtain the temperature profile of the board 2. Alternatively, or additionally, the controller may use the measurement from the board temperature sensor 5 to check, or verify, the temperature profile of the board 2, which is obtained using the thermal imaging camera 4, or which is calculated using the temperature and/or current sensors located at the bulbs 11.

The temperature profile of the board 2 may be obtained during the preheating routine for the board 2, and adjustments made to the preheating of the same board 2, or the profile may be obtained after preheating and the adjustments made to subsequent boards 2. Also, as with the previous example, the board 2 may be a calibration board which is inserted, periodically, into the soldering machine to be heated, and adjustments to the electrical power provided to the bulbs 2 made for subsequent electronics boards.

Also, in this example, the profile obtained using the thermal imaging camera 4 and data measured using the board temperature sensor 5 may be stored by the controller for use in maintaining the method of preheating a board 2.

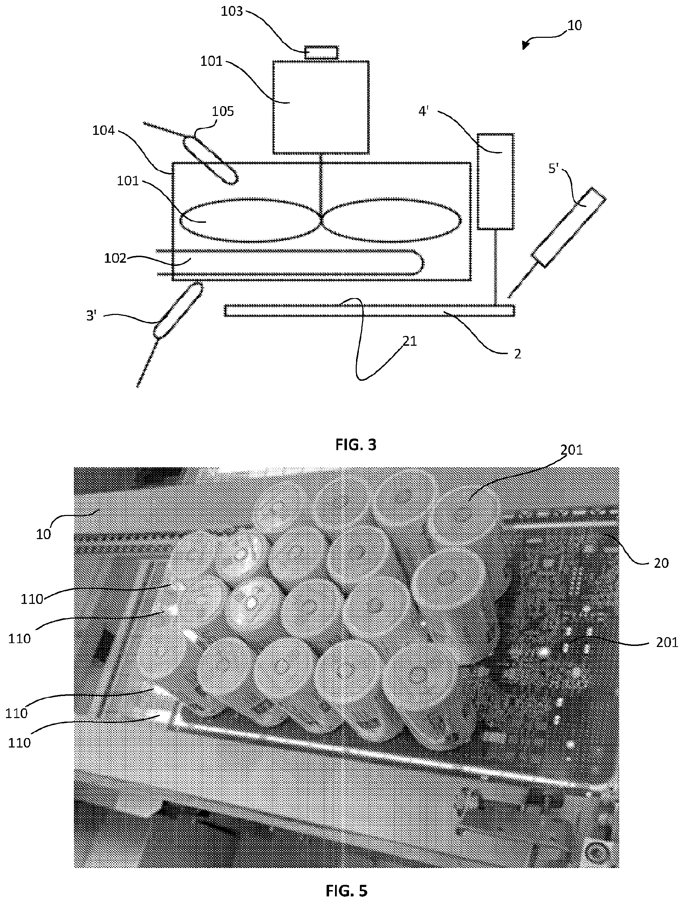

Turning now to Figure 3 there is shown another method of preheating a board 2 using a forced convection heating unit 10. This method is the same as that described with reference to Figure 2, with the exception that heat is provided by a forced convection heating unit 10 instead of by bulbs 11. Like features are denoted by a subsequent prime symbol in Figure 3. The board 2 is the same as the board described with reference to Figure 2. As in the previous example, the forced convection heating unit 10 is shown facing a topside of the board 2, but the forced convection heating unit 10 may instead face a bottom side of the board 2, or there may be a forced convection heating unit facing both the topside and the bottom side of the board 2.

The forced convection heating unit 10 has a fan 101 and at least one heating element 102. The fan 101 and the heating element/s 102 are located inside of a pressure chamber 104 and are connected to an electrical power source (not shown). In this example at least one pressure chamber temperature sensor 105 is provided which measures the air temperature inside of the pressure chamber 104. The pressure chamber temperature sensor 105 is in communication with the controller. The forced convection heating unit faces the board 2, which, as in the previous examples, may be an electronics board or a calibration board. The heating element/s 102 is/are located between the fan 101 and the board 2. When electrical power is provided to the heating element/s 102 the heating element/s emit/s heat, and the fan blows air past the heating element/s. The heated air heats a surface 21 of the board 2 which faces the heating element 1 when the board 2 is in a preheating position. The fan 101 has a frequency inverter (not shown) which controls the rotation speed thereof. The fan 101 has an encoder 103 which is used to measure the rotation speed of the fan 101. The electrical power supply, frequency inverter, and encoder are in communication with the controller.

The fan may have maintenance sensors installed thereupon, the maintenance sensors measuring operating parameters, such as current, vibration, or temperature, of moving parts of the fan. Maintenance sensors are in communication with the controller such that the controller can monitor operating parameters of the fan to identify indicators of damage such as wear.

In this example a plurality of chamber sensors 3' are provided, which are configured to measure a gas temperature between the conveyor and the heating unit 10. In this example the chamber sensors 3' measure the temperature proximal to the conveyor. The chamber sensors 3' may be used to obtain a profile of heat output from the heating unit 10. If a forced convection heating unit 10 is provided which faces the bottom side of the board 2 then chamber sensors 3' are located between this forced convection heating unit 10 and the board 2.

As in the example described with reference to Figure 2, a thermal imaging camera 4' is provided which obtains a thermal image of the surface 21 of the board 2. Also, as in the example described with reference to Figure 2, a board temperature sensor 5', for example a pyrometer, measures the temperature at a discrete location on the surface 21 of the board 2. Again, a thermal imaging camera and a temperature sensor may also, or instead, be positioned to measure temperatures on the bottom side of the board 2.

As in the previous example, the temperature profile of the board 2 is obtained using the thermal imaging camera 4'.

Also, as in the previous example, the profile of heat output from the heating unit 10 is obtained using the chamber sensor 3' and/or the pressure chamber temperature sensor 105. This obtained profile of heat output may be used to calculate amounts and/or distributions of heat transferred to the board 2. The controller may then adjust the power supplied to either of the heating element/s 102 or the fan 101, or adjust the rotation speed of the fan 101 using the frequency inverter, to adjust the heat output from the heating unit 10 to the board 2, in the same way that power to the bulbs 11 is adjusted in the example described with reference to Figure 1 and 2.

As in the previous example, data measured from any of the sensors, the temperature profile of the board 2, the profile of heat output from the heating unit 10, calculated amounts and/or distributions of heat transfer from the heating unit 10 to the board 2, and adjustments may be stored and processed by the controller such that trends or anomalies in the data, which may be indicative of problems with parts of the soldering machine, of a requirement for maintenance or replacement, or of incorrect operating parameters, may be identified.

In any of the aforementioned examples, the obtained profile/s may also be used to monitor the preheating process, and the controller may provide warnings or alarms if the deviation is temperature across the surface 21 of the board 2 is too high, for example greater than 30°. Similarly, any of the stored data may be used by the controller to monitor the preheating process, and provide an alarm or warning is a problem is identified.

Also, in the aforementioned examples, storing and processing data may be used for lifetime predictions of parts of the soldering machine or of products, such that maintenance can be scheduled in an optimal manner. Also stored may be the identification of each board, to which the data relates, so that the data store may be used for quality managing processes, for example, to determine which boards to inspect after processing.

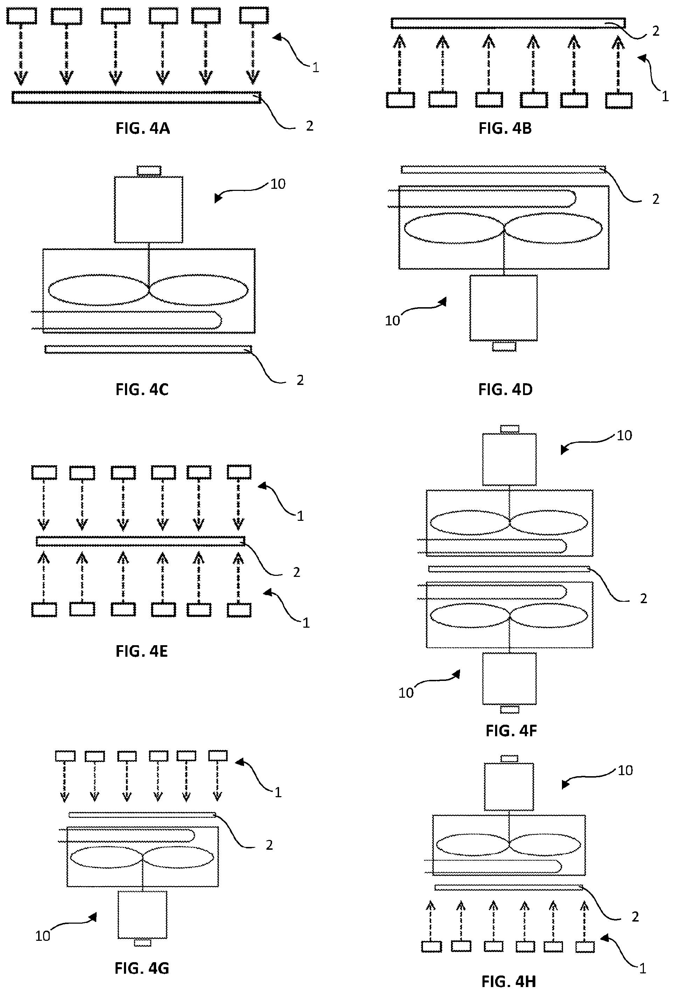

Referring now to Figure 4 there is shown various layouts of heating units with respect to the board. In Figure 4A an infra-red bulb heating unit is configured to face a topside of the board 2 and in Figure 4B an infra-red heating unit 1 is configured to face a bottom side of the board 2. In Figure 4C a forced convection heating unit is configured to face a topside of the board 2 and in Figure 4D a forced convection heating unit 1 is configured to face a bottom side of the board 2. In Figure 4E infra-red heating units are configured to heat a topside and a bottom side of the board 2 and in Figure 4F forced convection heating units are configured to heat a topside and a bottom side of the board 2. In Figure 4G an infra-red bulb heating unit is configured to face a topside of the board 2 and a forced convection heating unit 1 is configured to face a bottom side of the board 2. In Figure 4H a forced convection heating unit is configured to face a topside of the board 2 and an infra-red heating unit 1 is configured to face a bottom side of the board 2. In all of these examples the relevant chamber sensors 3, 3' are locatable between the heating unit and the board 2. Also, in all of these examples, thermal imaging cameras 4, 4' are locatable to capture thermal images or thermal video of either or both of the topside and bottom side surfaces of the board, as described in the previous examples. Also, in all of these examples temperature sensors 5, 5' are locatable to measure temperatures at discrete locations of either or both of the topside and the bottom side surfaces of the board, as described in the previous examples. Also, in any of these examples which have forced convection heating units, chamber temperature sensors 105 are locatable in the forced convection heating units.

Referring now to Figure 5 there is shown an electronics board 20 during preheating in a heating unit 10. The heating unit 10 has infrared bulbs 110. The preheating process shown in Figure 5 is the same as that which is described with reference to Figures 1 and 2. In the example shown in Figure 5 the electronics board 20 has numerous electrical components 201 connected, attached or mounted thereto. The electrical components 201 might be attached to the board 20 in that they are located on the board and are to be soldered to the board 20 after preheating. Otherwise, electrical components 201 might be already mounted to the board 20.

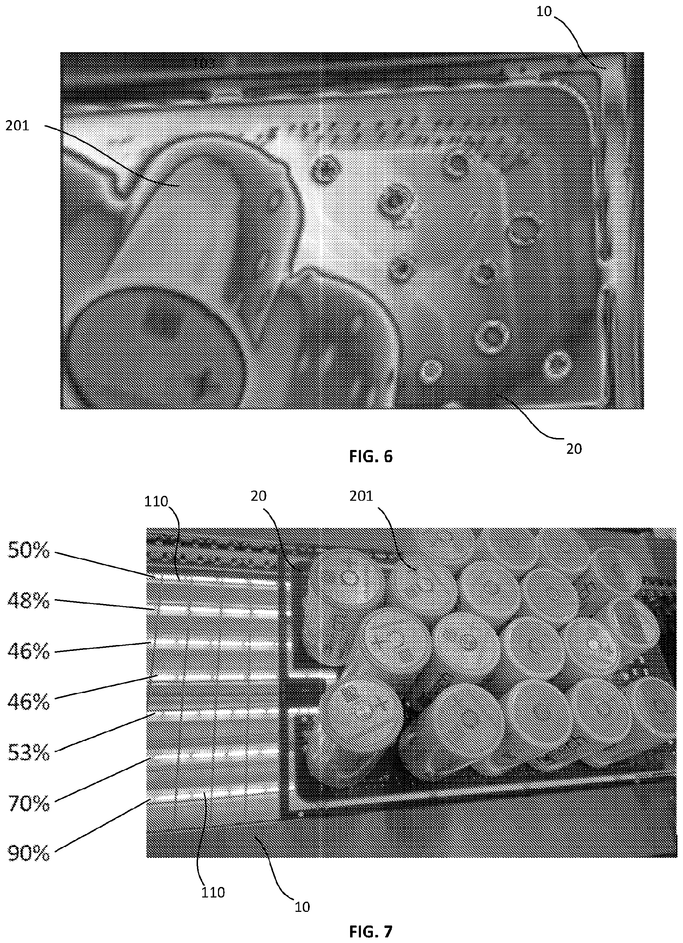

Figure 6 illustrates a thermal image of the electronics board 20 of Figure 5. As shown in Figure 6, the thermal image provides information about the temperature distribution across the electronics board, this information being provided visually by the shading in the thermal image. It will be appreciated that the temperature information may be provided in other shading schemes and/or colour schemes, such as in Ironbow or Arctic schemes.

Thermal images such as that of Figure 6 are processed in thermal image processing software to determine parameters such as temperatures of different areas of the electronics board 20, temperatures at specific points on the board 20, and temperatures of components 201 on the board 20. This processing of the thermal image provides operating software with temperature distributions and temperatures of components, which enables the operating software to adjust the power delivered to each bulb 110 of the heating unit 10 to reduce temperature differential across the board 20. This can also be used to prevent overheating of components 201. This enables evenly distributed preheating of the board 20 and prevents heat damage and warpage to the board 20. This also enables preheating of the board 20 to be achieved in the desired amount of time, for example because specific areas of the board can be heated less if the temperature is too high, without reducing the power to the entire heating unit 10.

Referring now to Figure 7 there is shown a photograph of the electronics board 20 of Figures 4 and 5 with an example of adjusted power values of each infrared bulb 110 shown on the left-hand side. The power values are described as a percentage of the total power supplied to each bulb.

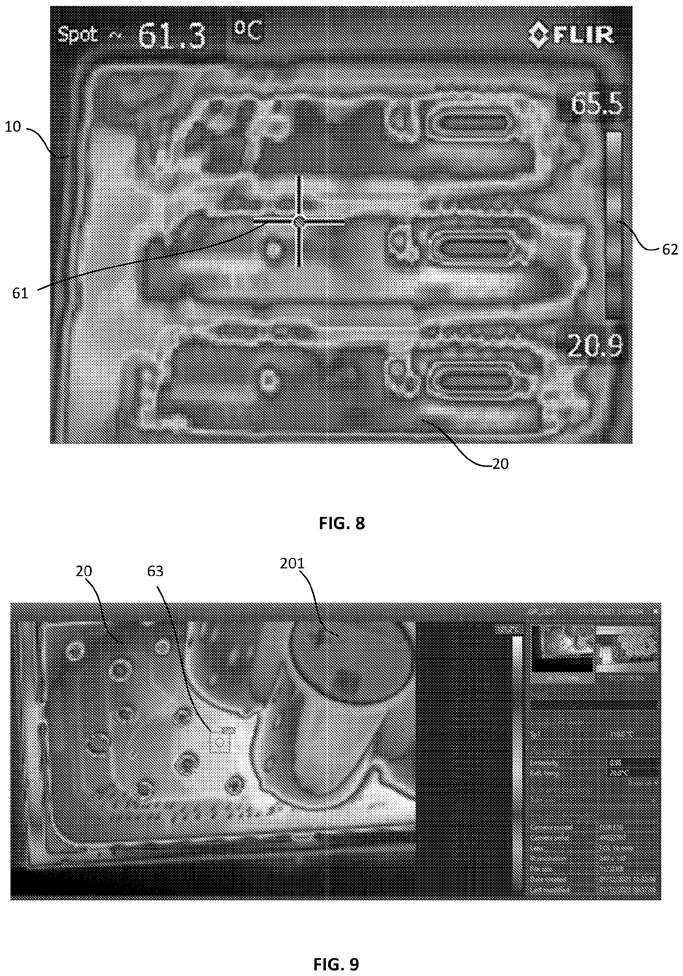

Referring now to Figure 8 there is shown an example of a thermal image of the electronics board 20 which is being preheated in the preheating unit 10. Figure 8 shows a display window of the thermal image in the thermal image processing software, which is used to view the temperature distribution of the board 20. In Figure 8 a temperature reading is obtained at a specific location, the location of which is shown by the cross hairs 61. In the example of Figure 8 the temperature at the selected location is 61.3°C. The display shown in Figure 8 also has a temperature scale 62. The temperature scale 62 provides a key for the shading contours of the thermal image, these temperatures ranging from between 20.9°C and 65.5°C in the example of Figure 8.

Referring now to Figure 9 there is shown a window of the thermal image processing software with a thermal image of the electronics board 20 displayed. On the righthand side of the window there is shown a temperature measurement at Sp1 of 118.0°C, and the selection of the measurement position is shown on the thermal image of the electronics board 20 by a selection box 63.

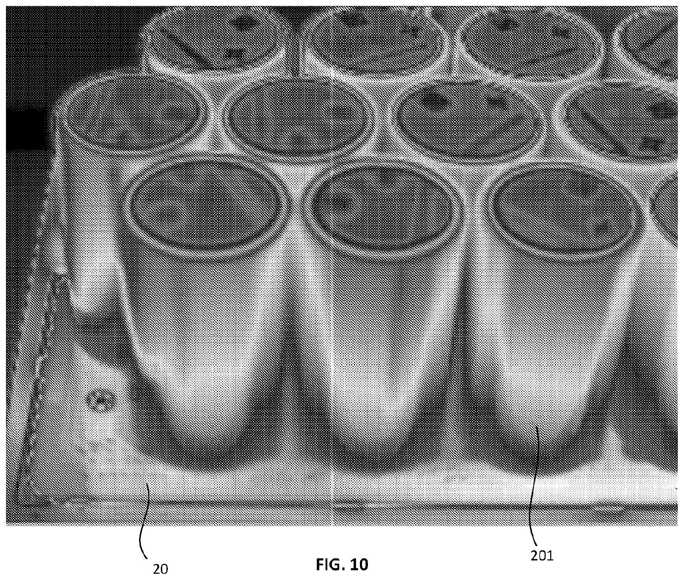

Referring now to Figure 10 there is shown a thermal image of the electronics board 20 which is taken from a side of the board 20, such that electrical components 201 are clearly visible. Such an image is obtained, for example, to measure the temperatures of some or all of the electrical components 201, to control the power to the heating unit to ensure that the electrical components 201 do not overheat during preheating.

The thermal images shown in Figures 7, 8 and 9 may be obtained in preheating processes using infrared bulbs, as described with reference to Figures 1 and 2 and Figures 4, 5 and 6, or may be obtained in preheating processes using forced convection, as described with reference to Figure 3.

## Claims

1. A method of controlling a preheating process for preheating a board in preparation for processing of the board in a soldering machine, the method comprising the steps of:
providing a heating unit configured to heat a surface of the board, for example a calibration board or an electronics board;
providing the board to the heating unit;
providing electrical power to the heating unit such that the heating unit emits heat;
the method being **characterised by** the following steps:
obtaining a profile of heat output from the heating unit and/or a temperature profile of the board; and
adjusting the electrical power provided to the heating unit to adjust the heat output from the heating unit to the board, so as to reduce the range of temperatures in the temperature distribution on the board wherein obtaining a temperature profile of the board comprises using a thermal imaging camera to obtain a thermal image of the board.

2. A method according to claim 1, wherein the thermal image of the board includes at least a part of a surface of the board opposite to the surface which the heating unit is configured to heat.

3. A method according to any of claims 1 or 2, wherein:
the heating unit is a forced convection unit comprising at least one fan and at least one heater;
providing electrical power to the heating unit comprises providing electrical power to the at least one fan to control a rotation speed of the at least one fan and/or providing electrical power to the at least one heater to control the amount of heat emitted by the at least one heater; and
adjusting the electrical power provided to the heating unit comprises adjusting the electrical power provided to the heater and/or to the fan; and
optionally, wherein obtaining a profile of heat output from the heating unit comprises measuring air flow temperature and/or air flow rate at at least one location in an air flow path from the fan.

4. A method according to claim 3, wherein controlling the rotation speed of the at least one fan comprises using an encoder to measure the rotation speed and a frequency inverter to control the rotation speed.

5. A method of controlling a preheating process for preheating a board in preparation for processing of the board in a soldering machine, the method comprising the steps of:
providing a heating unit configured to heat a surface of the board, for example a calibration board or an electronics board;
providing the board to the heating unit;
providing electrical power to the heating unit such that the heating unit emits heat;
the method being **characterised by** the following steps:
obtaining a profile of heat output from the heating unit and/or a temperature profile of the board; and
adjusting the electrical power provided to the heating unit to adjust the heat output from the heating unit to the board, so as to reduce the range of temperatures in the temperature distribution on the board, wherein:
the heating unit comprises a plurality of bulbs, for example infra-red bulbs;
providing electrical power to the heating unit comprises providing electrical power to each bulb; and
adjusting the electrical power provided to the heating unit comprises adjusting the electrical power provided to at least one bulb of the plurality of bulbs; and
wherein obtaining a profile of heat output from the heating unit comprises measuring the current drawn by each bulb, or the temperature of each bulb.

6. A method according to any preceding claim, wherein the board is an electronics board and the process further comprises obtaining a temperature profile of one or more electrical components which are connected to the board.

7. A method according to claim 6 further comprising adjusting the electrical power provided to the heating unit to maintain the temperature of the or each component to below a respective overheating temperature.

8. A preheating apparatus for preheating a board in preparation for processing of the board in a soldering machine, the apparatus comprising:
a heating unit configured to heat a surface of the board, for example a calibration board or an electronics board;
the preheating apparatus being **characterised by** the following:
a sensor configured to obtain a profile of heat output from the heating unit and/or to obtain a temperature profile of the board;
power supply circuitry configured to provide electrical power to the heating unit such that the heating unit emits heat;
control circuitry configured to adjust the electrical power provided to the heating unit to adjust the heat output from the heating unit to the board, so as to reduce the range of temperatures in the temperature distribution on the board, wherein the sensor comprises a thermal imaging camera which is configured to obtain a thermal image of the board in order for the apparatus to obtain a temperature profile of the board.

9. A preheating apparatus according to claim 8, wherein the thermal imaging camera is located such that, in use, the thermal image of the board includes at least a part of a surface of the board opposite to the surface which the heating unit is configured to heat.

10. A preheating apparatus for preheating a board in preparation for processing of the board in a soldering machine, the apparatus comprising:
a heating unit configured to heat a surface of the board, for example a calibration board or an electronics board;
the preheating apparatus being **characterised by** the following:
a sensor configured to obtain a profile of heat output from the heating unit and/or to obtain a temperature profile of the board;
power supply circuitry configured to provide electrical power to the heating unit such that the heating unit emits heat;
control circuitry configured to adjust the electrical power provided to the heating unit to adjust the heat output from the heating unit to the board, so as to reduce the range of temperatures in the temperature distribution on the board,
wherein:
the heating unit comprises a plurality of bulbs, for example infra-red bulbs;
the power supply circuitry is configured to provide electrical power to each bulb; and
the control circuitry is configured to adjust the electrical power provided to at least one bulb of the plurality of bulbs; and
wherein the sensor is configured to obtain a profile of heat output from the heating unit by measuring the current drawn by each bulb, or the temperature of each bulb.

11. A preheating apparatus according to any of claims 8 to 9, wherein:
the heating unit is a forced convection unit comprising at least one fan and at least one heater;
the power supply circuitry is configured to provide electrical power to the at least one fan to control a rotation speed of the at least one fan and/or to provide electrical power to the at least one heater to control the amount of heat emitted by the at least one heater; and
the control circuitry is configured to adjust the electrical power provided to the heater and/or to the fan; and
optionally, wherein the sensor is configured to obtain a profile of heat output from the heating unit by measuring air flow temperature and/or air flow rate at at least one location in an air flow path from the fan.

12. A preheating apparatus according to claim 11, wherein the power supply circuitry is configured to control the rotation speed of the at least one fan by using an encoder to measure the rotation speed and a frequency inverter to control the rotation speed.

13. A preheating apparatus according to any of claims 8 to 12, wherein the control circuitry is configured to store data relating to:
the electrical power provided to the heating unit;
the profile of heat output from the heating unit and/or the temperature profile of the board;
adjustment made to the electrical power provided to the heating unit;
wherein the control circuitry is configured to monitor the data to identify trends which indicate a requirement for maintenance, repair, and/or replacement of any components of the heating unit.

14. A soldering machine comprising a preheating apparatus according to any of claims 8 to 13.

15. A method of maintaining the preheating system according to any of claims 8 to 13, the method comprising using a controller to store data relating to:
the electrical power provided to the heating unit;
the profile of heat output from the heating unit and/or the temperature profile of the board;
adjustment made to the electrical power provided to the heating unit;
wherein the controller monitors the data to identify trends which indicate a requirement for maintenance, repair, and/or replacement of any components of the heating unit.

## Patentansprüche

1. Verfahren für ein Steuern eines Vorwärmprozesses für ein Vorwärmen einer Platine in Vorbereitung auf eine Verarbeitung der Platine in einer Lötmaschine, das Verfahren aufweisend die Schritte:
Bereitstellen einer Heizeinheit, ausgelegt für ein Erwärmen einer Fläche der Platine, beispielsweise einer Kalibrierungsplatine oder einer Elektronikplatine;
Bereitstellen der Platine an die Heizeinheit;
Bereitstellen elektrischer Leistung an die Heizeinheit, sodass die Heizeinheit Wärme abgibt;
das Verfahren **gekennzeichnet durch** folgende Schritte:
Erhalten eines Profils der Wärmeabgabe von der Heizeinheit und/oder eines Temperaturprofils der Platine; und
Anpassen der an die Heizeinheit bereitgestellten elektrischen Leistung, um die Wärmeausgabe von der Heizeinheit an die Platine anzupassen, um den Temperaturbereich in der Temperaturverteilung auf der Platine zu reduzieren, wobei das Erhalten eines Temperaturprofils der Platine ein Verwenden einer Wärmebildkamera aufweist, um ein Wärmebild der Platine zu erhalten.

2. Verfahren nach Anspruch 1, wobei das Wärmebild der Platine wenigstens einen Teil einer Fläche der Platine gegenüber der Fläche umfasst, für deren Erwärmen die Heizeinheit ausgelegt ist.

3. Verfahren nach einem der Ansprüche 1 oder 2, wobei:
die Heizeinheit eine Zwangskonvektionseinheit ist, die mindestens einen Lüfter und mindestens eine Heizvorrichtung aufweist;
Bereitstellen elektrischer Leistung an die Heizeinheit ein Bereitstellen elektrischer Leistung an den mindestens einen Lüfter aufweist, um eine Drehzahl des mindestens einen Lüfters zu steuern und/oder ein Bereitstellen elektrischer Leistung an die mindestens eine Heizvorrichtung, um die von der mindestens einen Heizvorrichtung abgegebene Wärmemenge zu steuern; und
Anpassen der an die Heizeinheit bereitgestellten elektrischen Leistung ein Anpassen der an die Heizvorrichtung und/oder den Lüfter bereitgestellten elektrischen Leistung aufweist; und
optional, wobei Erhalten eines Profils der Wärmeabgabe von der Heizeinheit ein Messen der Luftstromtemperatur und/oder der Luftstromgeschwindigkeit an mindestens einer Stelle in einem Luftstrompfad von dem Lüfter aufweist.

4. Verfahren nach Anspruch 3, wobei Steuern der Drehzahl des mindestens einen Lüfters ein Verwenden eines Encoders für ein Messen der Drehzahl und eines Frequenzumrichters für ein Steuern der Drehzahl aufweist.

5. Verfahren für ein Steuern eines Vorwärmprozesses für ein Vorwärmen einer Platine in Vorbereitung auf eine Verarbeitung der Platine in einer Lötmaschine, das Verfahren aufweisend die Schritte:
Bereitstellen einer Heizeinheit, ausgelegt für ein Erwärmen einer Fläche der Platine, beispielsweise einer Kalibrierungsplatine oder einer Elektronikplatine;
Bereitstellen der Platine an die Heizeinheit;
Bereitstellen elektrischer Leistung an die Heizeinheit, sodass die Heizeinheit Wärme abgibt;
das Verfahren **gekennzeichnet durch** folgende Schritte:
Erhalten eines Profils der Wärmeabgabe von der Heizeinheit und/oder eines Temperaturprofils der Platine; und
Anpassen der an die Heizeinheit bereitgestellten elektrischen Leistung, um die Wärmeausgabe von der Heizeinheit an die Platine anzupassen, um den Temperaturbereich in der Temperaturverteilung auf der Platine zu reduzieren, wobei:
die Heizeinheit eine Mehrzahl von Glühlampen, beispielsweise Infrarotglühlampen, aufweist;
Bereitstellen elektrischer Leistung an die Heizeinheit ein Bereitstellen elektrischer Leistung an jede Glühlampe aufweist; und
Anpassen der an die Heizeinheit bereitgestellten elektrischen Leistung ein Anpassen der an mindestens eine Glühlampe der Mehrzahl von Glühlampen bereitgestellten elektrischen Leistung aufweist; und
wobei Erhalten eines Profils der Wärmeabgabe von der Heizeinheit ein Messen des von jeder Glühlampe aufgenommenen Stroms oder der Temperatur jeder Glühlampe aufweist.

6. Verfahren nach einem der vorhergehenden Ansprüche, wobei die Platine eine Elektronikplatine ist und der Prozess ferner ein Erhalten eines Temperaturprofils von einer oder mehreren elektrischen Komponenten, die mit der Platine verbunden sind, aufweist.

7. Verfahren nach Anspruch 6, ferner aufweisend Anpassen der an die Heizvorrichtung bereitgestellten elektrischen Leistung, um die Temperatur der oder jeder Komponente unter einer entsprechenden Überhitzungstemperatur zu halten.

8. Vorwärmvorrichtung für ein Vorwärmen einer Platine in Vorbereitung auf eine Verarbeitung der Platine in einer Lötmaschine, die Vorrichtung aufweisend:
eine Heizeinheit, ausgelegt für ein Erwärmen einer Fläche der Platine, beispielsweise einer Kalibrierungsplatine oder einer Elektronikplatine;
die Vorwärmvorrichtung **gekennzeichnet durch** Folgendes:
einen Sensor, der ausgelegt ist für ein Erhalten eines Profils der Wärmeabgabe der Heizeinheit und/oder ein Erhalten eines Temperaturprofils der Platine;
Stromversorgungsschaltung, die ausgelegt ist für ein Bereitstellen elektrischer Leistung an die Heizeinheit, sodass die Heizeinheit Wärme abgibt;
eine Steuerschaltung, die ausgelegt ist für ein Anpassen der an die Heizeinheit bereitgestellten elektrischen Leistung, um die Wärmeabgabe von der Heizeinheit an die Platine anzupassen, um den Temperaturbereich in der Temperaturverteilung auf der Platine zu reduzieren, wobei der Sensor eine Wärmebildkamera aufweist, die ausgelegt ist für ein Erhalten eines Wärmebildes der Platine, damit die Vorrichtung ein Temperaturprofil der Platine erhalten kann.

9. Vorwärmvorrichtung nach Anspruch 8, wobei die Wärmebildkamera angeordnet ist, dass, in Gebrauch, das Wärmebild der Platine mindestens einen Teil einer Fläche der Platine umfasst, die der Fläche gegenüberliegt, für deren Erwärmung die Heizeinheit ausgelegt ist.

10. Vorwärmvorrichtung für ein Vorwärmen einer Platine in Vorbereitung auf eine Verarbeitung der Platine in einer Lötmaschine, die Vorrichtung aufweisend:
eine Heizeinheit, ausgelegt für ein Erwärmen einer Fläche der Platine, beispielsweise einer Kalibrierungsplatine oder einer Elektronikplatine;
die Vorwärmvorrichtung **gekennzeichnet durch** Folgendes:
einen Sensor, der ausgelegt ist für ein Erhalten eines Profils der Wärmeabgabe der Heizeinheit und/oder ein Erhalten eines Temperaturprofils der Platine;
Stromversorgungsschaltung, die ausgelegt ist für ein Bereitstellen elektrischer Leistung an die Heizeinheit, sodass die Heizeinheit Wärme abgibt;
Steuerschaltung, die ausgelegt ist für ein Anpassen der an die Heizeinheit bereitgestellten elektrischen Leistung, um die Wärmeabgabe von der Heizeinheit an die Platine anzupassen, um den Temperaturbereich in der Temperaturverteilung auf der Platine zu reduzieren, wobei:
die Heizeinheit eine Mehrzahl von Glühlampen, beispielsweise Infrarotglühlampen, aufweist;
die Stromversorgungsschaltung ausgelegt ist für ein Bereitstellen elektrischer Leistung an jede Glühlampe; und
die Steuerschaltung ausgelegt ist für ein Anpassen der an mindestens eine Glühlampe der Mehrzahl von Glühlampen bereitgestellten elektrischen Leistung; und
wobei der Sensor ausgelegt ist, für ein Erhalten eines Profils der Wärmabgabe von der Heizeinheit durch Messen des von jeder Glühlampe aufgenommenen Stroms oder der Temperatur jeder Glühlampe.

11. Vorwärmvorrichtung nach einem der Ansprüche 8 bis 9, wobei:
die Heizeinheit eine Zwangskonvektionseinheit ist, die mindestens einen Lüfter und mindestens eine Heizvorrichtung aufweist;
die Stromversorgungsschaltung ausgelegt ist für ein Bereitstellen elektrischer Leistung an den mindestens einen Lüfter, um eine Drehzahl des mindestens einen Lüfters zu steuern und/oder ein Bereitstellen elektrischer Leistung an die mindestens eine Heizvorrichtung, um die von der mindestens einen Heizvorrichtung abgegebene Wärmemenge zu steuern; und
die Steuerschaltung ausgelegt ist für ein Anpassen der an die Heizvorrichtung und/oder an den Lüfter bereitgestellten elektrischen Leistung; und
optional, wobei der Sensor ausgelegt ist für ein Erhalten eines Profils der Wärmeabgabe von der Heizeinheit durch Messen einer Luftstromtemperatur und/oder einer Luftstromgeschwindigkeit an mindestens einer Stelle in einem Luftstrompfad von dem Lüfter.

12. Vorwärmvorrichtung nach Anspruch 11, wobei die Stromversorgungsschaltung ausgelegt ist für ein Steuern der Drehzahl des mindestens einen Lüfters durch Verwenden eines Encoders für ein Messen der Drehzahl und eines Frequenzumrichters für ein Steuern der Drehzahl.

13. Vorwärmvorrichtung nach einem der Ansprüche 8 bis 12, wobei die Steuerschaltung ausgelegt ist für ein Speichern von Daten bezüglich:
der an die Heizeinheit bereitgestellten elektrischen Leistung;
des Profils der Wärmeabgabe von der Heizeinheit und/oder des Temperaturprofils der Platine;
vorgenommenen Anpassungen der an die Heizeinheit bereitgestellten elektrischen Leistung;
wobei die Steuerschaltung ausgelegt ist für ein Überwachen von Daten, um Trends zu identifizieren, die einen Bedarf für Wartung, Reparatur und/oder Austausch von Komponenten der Heizeinheit angeben.

14. Lötmaschine, aufweisend eine Vorwärmvorrichtung nach einem der Ansprüche 8 bis 13.

15. Verfahren für ein Aufrechterhalten des Vorwärmsystems nach einem der Ansprüche 8 bis 13, das Verfahren aufweisend Verwenden einer Steuerung für ein Speichern von Daten bezüglich:
der an die Heizeinheit bereitgestellten elektrischen Leistung;
des Profils der Wärmeabgabe von der Heizeinheit und/oder des Temperaturprofils der Platine;
vorgenommenen Anpassungen der an die Heizeinheit bereitgestellten elektrischen Leistung;
wobei die Steuerung die Daten überwacht, um Trends zu identifizieren, die einen Bedarf für Wartung, Reparatur und/oder Austausch von Komponenten der Heizeinheit angeben.

## Revendications

1. Procédé de commande d'un processus de préchauffage pour préchauffer une carte en préparation du traitement de la carte dans une machine à souder, le procédé comprenant les étapes consistant à :
fournir une unité de chauffage configurée pour chauffer une surface de la carte, par exemple une carte d'étalonnage ou une carte électronique ;
fournir la carte à l'unité de chauffage ;
fournir une puissance électrique à l'unité de chauffage de telle sorte que l'unité de chauffage émet de la chaleur ;
le procédé étant **caractérisé par** les étapes suivantes :
l'obtention d'un profil de chaleur fournie en sortie depuis l'unité de chauffage et/ou d'un profil de température de la carte ; et
l'ajustement de la puissance électrique fournie à l'unité de chauffage pour ajuster la chaleur fournie en sortie depuis l'unité de chauffage à la carte, de manière à réduire la plage de températures dans la distribution de température sur la carte, dans lequel l'obtention d'un profil de température de la carte comprend l'utilisation d'une caméra d'imagerie thermique pour obtenir une image thermique de la carte.

2. Procédé selon la revendication 1, dans lequel l'image thermique de la carte comporte au moins une partie d'une surface de la carte opposée à la surface que l'unité de chauffage est configurée pour chauffer.

3. Procédé selon l'une quelconque des revendications 1 ou 2, dans lequel :
l'unité de chauffage est une unité de convection forcée comprenant au moins un ventilateur et au moins un dispositif de chauffage ;
la fourniture de puissance électrique à l'unité de chauffage comprend la fourniture de puissance électrique à l'au moins un ventilateur pour commander une vitesse de rotation de l'au moins un ventilateur et/ou la fourniture de puissance électrique à l'au moins un dispositif de chauffage pour commander la quantité de chaleur émise par l'au moins un dispositif de chauffage ; et
l'ajustement de la puissance électrique fournie à l'unité de chauffage comprend l'ajustement de la puissance électrique fournie au dispositif de chauffage et/ou au ventilateur ; et
facultativement, dans lequel l'obtention d'un profil de chaleur fournie en sortie depuis l'unité de chauffage comprend la mesure de la température de l'écoulement d'air et/ou du débit d'air au niveau d'au moins un emplacement dans un trajet d'écoulement d'air à partir du ventilateur.

4. Procédé selon la revendication 3, dans lequel la commande de la vitesse de rotation de l'au moins un ventilateur comprend l'utilisation d'un codeur pour mesurer la vitesse de rotation et d'un inverseur de fréquence pour commander la vitesse de rotation.

5. Procédé de commande d'un processus de préchauffage pour préchauffer une carte en préparation du traitement de la carte dans une machine à souder, le procédé comprenant les étapes consistant à :
fournir une unité de chauffage configurée pour chauffer une surface de la carte, par exemple une carte d'étalonnage ou une carte électronique ;
fournir la carte à l'unité de chauffage ;
fournir une puissance électrique à l'unité de chauffage de telle sorte que l'unité de chauffage émet de la chaleur ;
le procédé étant **caractérisé par** les étapes suivantes :
l'obtention d'un profil de chaleur fournie en sortie depuis l'unité de chauffage et/ou d'un profil de température de la carte ; et
l'ajustement de la puissance électrique fournie à l'unité de chauffage pour ajuster la chaleur fournie en sortie depuis l'unité de chauffage à la carte, de manière à réduire la plage de températures dans la distribution de température sur la carte, dans lequel :
l'unité de chauffage comprend une pluralité d'ampoules, par exemple des ampoules à infrarouge ;
la fourniture de puissance électrique à l'unité de chauffage comprend la fourniture de puissance électrique à chaque ampoule ; et
l'ajustement de la puissance électrique fournie à l'unité de chauffage comprend l'ajustement de la puissance électrique fournie à au moins une ampoule parmi la pluralité d'ampoules ; et
dans lequel l'obtention d'un profil de chaleur fournie en sortie depuis l'unité de chauffage comprend la mesure du courant consommé par chaque ampoule, ou de la température de chaque ampoule.

6. Procédé selon l'une quelconque des revendications précédentes, dans lequel la carte est une carte électronique et le procédé comprend en outre l'obtention d'un profil de température d'un ou plusieurs composants électriques qui sont connectés à la carte.

7. Procédé selon la revendication 6, comprenant en outre l'ajustement de la puissance électrique fournie à l'unité de chauffage pour maintenir la température du ou de chaque composant au-dessous d'une température de surchauffe respective.

8. Appareil de préchauffage pour préchauffer une carte en préparation du traitement de la carte dans une machine à souder, l'appareil comprenant :
une unité de chauffage configurée pour chauffer une surface de la carte, par exemple une carte d'étalonnage ou une carte électronique ;
l'appareil de préchauffage étant **caractérisé par** ce qui suit :
un capteur configuré pour obtenir un profil de chaleur fournie en sortie depuis l'unité de chauffage et/ou pour obtenir un profil de température de la carte ;
une circuiterie d'alimentation de puissance configurée pour fournir de la puissance électrique à l'unité de chauffage de telle sorte que l'unité de chauffage émet de la chaleur ;
une circuiterie de commande configurée pour ajuster la puissance électrique fournie à l'unité de chauffage pour ajuster la chaleur fournie en sortie depuis l'unité de chauffage à la carte, de manière à réduire la plage de températures dans la distribution de température sur la carte, dans lequel le capteur comprend une caméra d'imagerie thermique qui est configurée pour obtenir une image thermique de la carte afin que l'appareil obtienne un profil de température de la carte.

9. Appareil de préchauffage selon la revendication 8, dans lequel la caméra d'imagerie thermique est située de telle sorte que, en utilisation, l'image thermique de la carte comporte au moins une partie d'une surface de la carte opposée à la surface que l'unité de chauffage est configurée pour chauffer.

10. Appareil de préchauffage pour préchauffer une carte en préparation du traitement de la carte dans une machine à souder, l'appareil comprenant :
une unité de chauffage configurée pour chauffer une surface de la carte, par exemple une carte d'étalonnage ou une carte électronique ;
l'appareil de préchauffage étant **caractérisé par** ce qui suit :
un capteur configuré pour obtenir un profil de chaleur fournie en sortie depuis l'unité de chauffage et/ou pour obtenir un profil de température de la carte ;
une circuiterie d'alimentation de puissance configurée pour fournir de la puissance électrique à l'unité de chauffage de telle sorte que l'unité de chauffage émet de la chaleur ;
une circuiterie de commande configurée pour ajuster la puissance électrique fournie à l'unité de chauffage pour ajuster la chaleur fournie en sortie depuis l'unité de chauffage à la carte, de manière à réduire la plage de températures dans la distribution de température sur la carte, dans lequel :
l'unité de chauffage comprend une pluralité d'ampoules, par exemple des ampoules à infrarouge ;
la circuiterie d'alimentation de puissance est configurée pour fournir de la puissance électrique à chaque ampoule ; et
la circuiterie de commande est configurée pour ajuster la puissance électrique fournie à au moins une ampoule parmi la pluralité d'ampoules ; et
dans lequel le capteur est configuré pour obtenir un profil de chaleur fournie en sortie depuis l'unité de chauffage par la mesure du courant consommé par chaque ampoule, ou de la température de chaque ampoule.

11. Appareil de préchauffage selon l'une quelconque des revendications 8 et 9, dans lequel :
l'unité de chauffage est une unité de convection forcée comprenant au moins un ventilateur et au moins un dispositif de chauffage ;
la circuiterie d'alimentation de puissance est configurée pour fournir de la puissance électrique à l'au moins un ventilateur pour commander une vitesse de rotation de l'au moins un ventilateur et/ou pour fournir de la puissance électrique à l'au moins un dispositif de chauffage pour commander la quantité de chaleur émise par l'au moins un dispositif de chauffage ; et
la circuiterie de commande est configurée pour ajuster la puissance électrique fournie au dispositif de chauffage et/ou au ventilateur ; et
facultativement, dans lequel le capteur est configuré pour obtenir un profil de chaleur fournie en sortie depuis l'unité de chauffage par la mesure de la température de l'écoulement d'air et/ou du débit d'air au niveau d'au moins un emplacement dans un trajet d'écoulement d'air à partir du ventilateur.

12. Appareil de préchauffage selon la revendication 11, dans lequel la circuiterie d'alimentation de puissance est configurée pour commander la vitesse de rotation de l'au moins un ventilateur en utilisant un codeur pour mesurer la vitesse de rotation et un inverseur de fréquence pour commander la vitesse de rotation.

13. Appareil de préchauffage selon l'une quelconque des revendications 8 à 12, dans lequel la circuiterie de commande est configurée pour stocker des données concernant :
la puissance électrique fournie à l'unité de chauffage ;
le profil de chaleur fournie en sortie depuis l'unité de chauffage et/ou le profil de température de la carte ;
l'ajustement effectué sur la puissance électrique fournie à l'unité de chauffage ;
dans lequel la circuiterie de commande est configurée pour surveiller les données afin d'identifier des tendances qui indiquent une exigence d'entretien, de réparation et/ou de remplacement de tout composant de l'unité de chauffage.

14. Machine à souder comprenant un appareil de préchauffage selon l'une quelconque des revendications 8 à 13.

15. Procédé d'entretien du système de préchauffage selon l'une quelconque des revendications 8 à 13, le procédé comprenant l'utilisation d'un dispositif de commande pour stocker des données concernant :
la puissance électrique fournie à l'unité de chauffage ;
le profil de chaleur fournie en sortie depuis l'unité de chauffage et/ou le profil de température de la carte ;
l'ajustement effectué sur la puissance électrique fournie à l'unité de chauffage ;
dans lequel le dispositif de commande surveille les données afin d'identifier des tendances qui indiquent une exigence d'entretien, de réparation et/ou de remplacement de tout composant de l'unité de chauffage.
